# EUROPÄISCHE PATENTSCHRIFT

(11) **EP 0 721 409 B1**
(45) Veröffentlichungstag und Bekanntmachung des Hinweises auf die Patenterteilung: **08.09.1999**
(21) Anmeldenummer: 95921697.9
(22) Anmeldetag: 19.06.1995
(51) Int. Cl.: B60T 17/22, B60T 13/66, B60T 8/00

(54) **VERFAHREN UND VORRICHTUNG ZUR ERMITTLUNG DES ANLEGEDRUCKS EINER BREMSEINRICHTUNG FÜR FAHRZEUGE**
METHOD AND DEVICE FOR DETERMINING THE APPLIED PRESSURE OF A VEHICLE BRAKE SYSTEM
PROCEDE ET DISPOSITIF DE DETERMINATION DE LA PRESSION APPLIQUEE PAR UN SYSTEME DE FREINAGE DE VEHICULE

(30) Priorität: 09.07.1994 DE 4424270
(43) Veröffentlichungstag der Anmeldung: 17.07.1996
(73) Patentinhaber: ROBERT BOSCH GMBH, 70442 Stuttgart (DE)
(72) Erfinder: STUMPE, Werner, D-70374 Stuttgart (DE)
(86) Internationale Anmeldenummer: DE9500782
(87) Internationale Veröffentlichungsnummer: WO9601757

(56) Entgegenhaltungen:
- EP-A- 0 588 193
- DE-A- 4 112 845
- DE-A- 4 310 422

## Beschreibung

### Stand der Technik

Die Erfindung betrifft ein Verfahren und eine Vorrichtung zur Ermittlung des Anlegedrucks einer Radbremse für Fahrzeugs gemäß den Oberbegriffen der unabhängigen Patentansprüche.

Ein derartiges Verfahren bzw. eine derartige Vorrichtung ist aus der DE 41 12 845 A1 bekannt. Bei der dort beschriebenen Druckluftbremsanlage wird durch Auswerten des zeitlichen Druckverlaufs bei einer Bremsbetätigung der Anlegedruck der einzelnen Radbremsen bestimmt. Der ermittelte Anlegedruck dient zur Korrektur des vom Fahrerwunsch abgeleiteten Solldrucks für die einzelne Radbremse im Sinne der Herstellung einer an allen Fahrzeugrädern bzw. an den Fahrzeugrädern einer Achse gleich großen Bremskraft. Dadurch werden Einflüsse durch Verschleiß, Reibwertschwankungen, mechanische Verluste und Toleranzen an den einzelnen Radbremsen kompensiert. Zur Ermittlung des Anlegedrucks wird der zeitliche Druckanstieg während einer Bremsbetätigung erfaßt und bei Erkennen eines Knickpunktes der dann vorliegende Bremsdruck als Anlegedruck gespeichert. Zusätzlich kann zur Ermittlung des Anlegedrucks ein Wegsensor zur Ermittlung des von einer Bremszylinderkolbenstange zurückgelegten Wegs verwendet werden. Als Anlegedruck wird dann der Druckwert gespeichert, der vorliegt, wenn sich im zeitlichen Verlauf des von der Kolbenstange zurückgelegten Wegs ein Knickpunkt ergibt. Der zusätzliche Wegsensor zur Erfassung des Bremsenanlegedrucks verbessert die Genauigkeit der Ermittlung des Anlegsdrucks, da der zeitliche Druckverlauf stark von der Betätigung des Sollwertgebers durch den Fahrer abhängig ist. Dieser Wegsensor stellt jedoch für die Bremsanlage einen zusätzlichen Sensor dar, der zudem noch unmittelbar vom Bremsdruck betätigt wird.

Es ist Aufgabe der Erfindung, die Ermittlung eines Anlegedrucks einer Radbremse für ein Fahrzeug zu verbessern.

Dies wird durch die kennzeichnenden Merkmale der unabhängigen Patentansprüche erreicht.

Aus dem Stand der Technik sind verschiedene Verfahren und Vorrichtungen zur Ermittlung des Anlegedrucks bekannt, welche entweder den Anlegedruck aufgrund des zeitlichen Druckverlaufs bei Betätigen und Lösen der Bremse oder unter Zuhilfenahme eines zusätzlichen Wegsensors ermitteln. Derartige Verfahren und Vorrichtungen werden in der DE 42 06 238 A1, DE 42 06 240 A1 sowie der DE 42 30 911 A1 beschrieben.

### Vorteile der Erfindung

Die erfindungsgemäße Vorgehensweise erlaubt eine verbesserte Ermittlung des Anlegedrucks in elektronisch geregelten Bremsanlagen, sowohl bei elektrischen, elektro-pneumatischen als auch in elektro-hydraulischen Bremsanlagen, bei Trommel- und Scheibenbremsen.

Besonders vorteilhaft ist, daß der Bremsdruck beim Druckabbau zur Ermittlung des Anlegedrucks verwendet werden. Da beim Druckabbau Druckmittel abströmt, sind die Verhältnisse zur Auswertung des Druckverlaufs stabiler als beim Druckaufbau.

Besonders vorteilhaft ist die Bestimmung des Anlegedrucks aus Druckwerten, die beim Druckaufbau und beim Druckabbau gewonnen wurden. Dabei wird in vorteilhafter Weise die vorhandene Hysterese ermittelt und bei Bestimmung des Anlegedruckwerts berücksichtigt.

Besondere Vorteile ergibt die Anwendung der erfindungsgemäßen Vorgehensweise bei einem Proportionalventil, welches als Regelventil zur Steuerung des Bremsdruckes eingesetzt wird. Da hier das Betätigungssignal des Ventils proportional zum Bremsdruck ist, kann auf eine Druckmessung verzichtet und aus der Größe des Betätigungssignals ein Maß für den Bremsdruck und damit für den Anlegedruck ermittelt werden.

Besondere Vorteile zeigt die Verwendung der Rad- bzw. Fahrgeschwindigkeit zur Ermittlung des Anlegezeitpunktes und damit des Anlegedruckwerts. Die Verwendung der Geschwindigkeit ermöglicht eine exaktere Bestimmung des Anlegezeitpunktes, insbesondere dann, wenn die Beschleunigung und/oder die zweite zeitliche Ableitung der Radgeschwindigkeit zur Ermittlung des Anlegezeitpunktes herangezogen wird. Diese Vorteile ergeben sich, weil die Rad- bzw. Fahrgeschwindigkeit nicht unmittelbar vom Druck in der Bremsanlage abhängt, sondern lediglich mittelbar die Auswirkungen der Druckänderungen zeigt. Ferner müssen keine zusätzlichen Sensoren verwendet werden, da Drehzahlfühler durch die ABS-Funktion der Bremsanlage ohnehin vorhanden sind.

Die erfindungsgemäße Vorgehensweise kann ferner bei allen elektronisch geregelten Bremsanlagen angewendet werden, unabhängig davon, ob rein elektrisch gesteuert wird oder ob ein zusätzlicher Notbremskreis vorhanden ist.

Weitere Vorteile ergeben sich aus der nachfolgenden Beschreibung von Ausführungsbeispielen und aus den abhängigen Ansprüchen.

### Zeichnung

Die Erfindung wird nachstehend anhand der in der Zeichnung dargestellten Ausführungsformen näher erläutert. Figur 1 zeigt ein Übersichtsblockschaltbild eines elektronisch gesteuerten Bremssystems am Beispiel eines Rades, Figur 2 zeigt typische Signalverläufe des Radgeschwindigkeitssignal bei Bremsbeginn und Bremsende, Figur 3 und 4 zeigen typische Signalverläufe des Druckaufbaus bzw. Druckabbaus über der Zeit sowie der entsprechenden Verläufe der Raddrehzahlgeschwindigkeit, deren erste und zweite zeitliche Ableitung. Figur 5 zeigt ein Flußdiagramm zur Ermittlung des Anlegedrucks bei Bremsbetätigung, während Figur 6 ein Flußdiagramm zur Ermittlung des Anlegedrucks bei Lösen der Bremse zeigt.

### Beschreibung von Ausführungsbeispielen

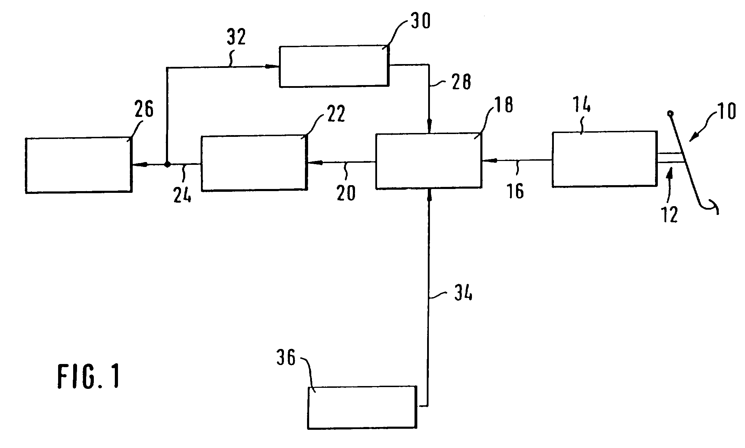

Figur 1 zeigt ein Übersichtsblockschaltbild einer elektrisch bzw. elektronisch gesteuerten Bremsanlage wie sie aus dem eingangs genannten Stand der Technik bekannt ist. Ein Bremspedal 10 ist über eine mechanische Verbindung 12 mit einem elektrischen und pneumatischen bzw. hydraulischen Sollwertgeber 14 verbunden. Von diesem führt eine Verbindungsleitung 16 zu einer elektrischen Steuereinheit 18, welche die elektrische Steuerung der Bremsanlage vornimmt. Von der elektrischen Steuereinheit 18 führt eine Verbindungsleitung 20 zu einem Steuer- oder Regelventil 22 des pneumatischen bzw. hydraulischen Teils der Bremsanlage oder einer elektrischen Stelleinrichtung einer elektrischen Bremsanlage. Bei diesem Ventil kann es sich um ein üblicherweise eingesetztes schaltendes Magnetventil oder um ein Proportionalventil, welches den Druck in dem dem Ventil zugeordneten Radbremszylinder entsprechend dem Ansteuersignal auf der Leitung 20 einstellt, oder um Stellmotoren oder Stellmagneten handeln. Dies ist in Figur 1 durch die Verbindung 24 vom Ventil 22 zu dem Radbremszylinder 26 einer nicht dargestellten Radbremse symbolisiert. Der Steuereinheit 18 ist ferner die Verbindungsleitung 28 von einem Sensor 30 zugeführt, welcher den Bremsdruck im Bereich des Ventils 22 oder des Bremszylinders 26 erfaßt (Verbindung 32). Ferner wird der Steuereinheit 18 die Leitung 34 von einem Sensor 36 zur Erfassung der Radgeschwindigkeit des nicht dargestellten Rades zugeführt. Aus Übersichtlichkeitsgründen ist der bei derartigen elektrisch gesteuerten Bremsanlagen vorhandene hydraulische bzw. pneumatische Bremskreis, der im Falle eines Ausfalls der Steuereinheit 18 die Bremsfunktion sicherstellt, nicht dargestellt. Wird als Ventil 22 ein Proportionalventil verwendet, kann der Sensor 30 zur Erfassung eines Bremsdrucks entfallen und ein Maß für den Bremsdruck aus dem Ansteuersignal des Proportionalventils abgeleitet werden. Ebenso an Ansteuersignalen, wenn die Stelleinrichtung motorisch oder magnetisch ist.

Vom Sollwertgeber 18 wird bei Betätigung des Bremspedals 10 durch den Fahrer der elektrischen Steuereinheit 18 ein elektrischer Stellungswert zugeführt, der in der Steuereinheit mittels Kennlinien, Tabellen oder Kennfelder in Sollbremsdruckwerte für die einzelnen Radbremsen umgewandelt wird. Abhängig vom Solldruckwert für jede Radbremse steuert die Steuereinheit 18 das den Druck in einem Radbremszylinder beeinflussende Ventil 22 an. Der Solldruck wird dabei bei Verwendung eines Proportionalventils durch exakte Vorgabe des Ansteuersignals für das Ventil oder, wie auch bei Verwendung herkömmlicher schaltender Magnetventile, durch Regelung des vom Sensor 30 erfaßten Bremsdrucks auf den Solldruckwert eingestellt. Wie eingangs dargestellt, ist es das Ziel, neben einem gleichmäßigen Belagverschleiß ein gleichzeitiges Einsetzen und eine gleiche große Wirkung der Bremsung an allen Fahrzeugrädern, wenigstens jedoch an Fahrzeugrädern einer Achse, zu erreichen. Zu diesem Zweck ist in der Steuereinheit 18 für jede Radbremse eine Kennlinie der Bremskraft über den Sollbremsdruck abgelegt. Dabei ist jeder Radbremse ein Solldruck zugeordnet, bei welchem die Bremse anliegt, d.h. die ausgeübte Bremskraft gerade von Null verschieden ist und ein Ansteuersignal für das zugeordnete Ventil erzeugt wird. Dieser sog. Anlegedruck ist in der Regel für jede Radbremse verschiedenen und ändert sich während der Lebensdauer des Kraftfahrzeugs. Die im folgenden geschilderten erfindungsgemäßen Maßnahmen dienen zur Festlegung dieses Anlegedruckwertes, der zu einer entsprechenden Anpassung der Kennlinie führt.

Zur Bestimmung dieses Anlegedrucks wird dabei die Raddrehzahl bzw. die Radgeschwindigkeit ausgewertet. Die Erfassung der Radgeschwindigkeit erfolgt dabei in einem bevorzugten Ausführungsbeispiel mittels eines Sensors mit Zahnkranz. Dieser Zahnkranz weist ausgezeichnete Zähne auf, welche zu definierten von der Steuereinheit erfaßten Signalimpulsen führen. Zur Bestimmung der Raddrehzahl wird durch einen mit konstanter Taktfrequenz betriebenen Zähler der zeitliche Abstand zwischen diesen definierten Signalimpulsen ermittelt (N). Daraus läßt sich durch Kehrwertbildung die Drehwinkelgeschwindigkeit und deren zeitlichen Ableitungen berechnen.

In anderen vorteilhaften Ausführungsbeispielen werden im Rahmen der erfindungsgemäßen Vorgehensweise auch andere Drehzahlerfassungen, beispielsweise die Zählung von Impulsen innerhalb einer festen Zeit, angewendet.

Zur Eliminierung zufälliger Abweichung der Drehzahlwerte wird in einem vorteilhaften Ausführungsbeispiel gemittelte Signalwerte zur Bestimmung des Anlegezeitpunkts der Bremse verwendet.

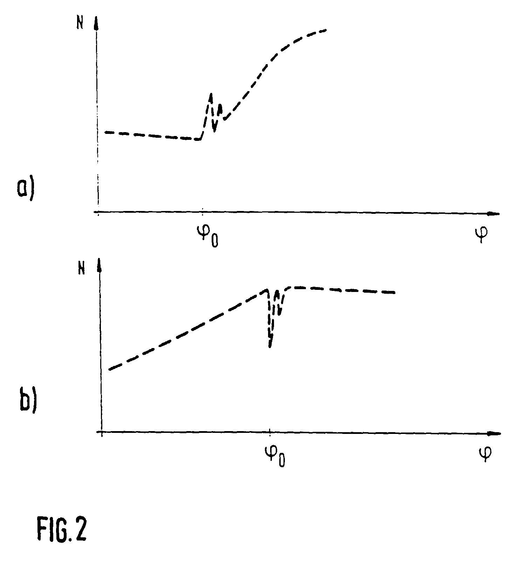

Figur 2 zeigt typische Signalverläufe des Drehzahlsignals über den Drehwinkel des Rades bzw. über der Zeit. Dabei zeigt Figur 2a die Situation bei Bremsbetätigung, in Figur 2b beim Lösen der Bremse. Senkrecht ist jeweils die Impulszahl N aufgetragen, während waagrecht der Drehwinkel des Rades (bzw. die Zeit) aufgetragen ist.

So lange die Bremse nicht betätigt ist (vgl. Drehwinkel kleiner ϕ₀) ist ein frei rollendes Rad vorhanden, das entweder beschleunigt oder durch Widerstände wie Reibung, Straßensteigung oder Dauerbremse in geringem Maße verzögert wird. Dieser Antriebszustand ist daher durch einen relativ kontinuierlichen Verlauf der Raddrehzahl gekennzeichnet. Dieser kontinuierliche Verlauf wird mit Einsetzen der Bremse kurzzeitig gestört (Zeitpunkt ϕ₀). Ursache für diese kurzzeitige Störung ist eine zusätzliche Verspannung zwischen der Bremse und Straße durch Lose in den Bremsenteilen und durch die mit Luft gefüllten profilierten Reifen. Mit anderen Worten wird der Drehzahlverlauf (vgl. Drehwinkel ϕ₀) beim Anlegen der Bremse in charakteristischer Weise gestört. Bei angelegter Bremse verzögert das Fahrzeug stark, die in Figur 2a gezeigte Zahl N nimmt stark zu, die Drehgeschwindigkeit des Rades verringert sich. Ein entsprechendes Verhalten ergibt sich beim Lösen der Bremse. In Figur 2b ist für Drehwinkel kleiner ϕ₀ ein Bremsvorgang gezeichnet, in welchem die Radgeschwindigkeit sich stark verrringert, die Zahl N sich demnach erhöht. Zum Zeitpunkt ϕ₀ wird die Bremse gelöst, d.h. die anliegenden Bremsenteile verlieren den Kontakt. Auch hier zeigt sich eine charakteristische Störung im Drehzahlverlauf durch die oben genannten Ursachen. Bei geloster Bremse liegt wieder ein freirollendes Rad vor, was durch einen im wesentlichen geraden Verlauf der Drehzahl für Drehwinkel größer ϕ₀ charakterisiert ist. Durch die Auswertung dieses charakteristischen Drehzahlverlaufs bei der Ermittlung des Anlegedrucks während der Bremsbetätigung und kurz danach ergibt sich eine genaue Bestimmung des Anlegedrucks sowohl bei Bremsbetätigung und Druckaufbau als auch bei Lösen der Bremse und Druckabbau.

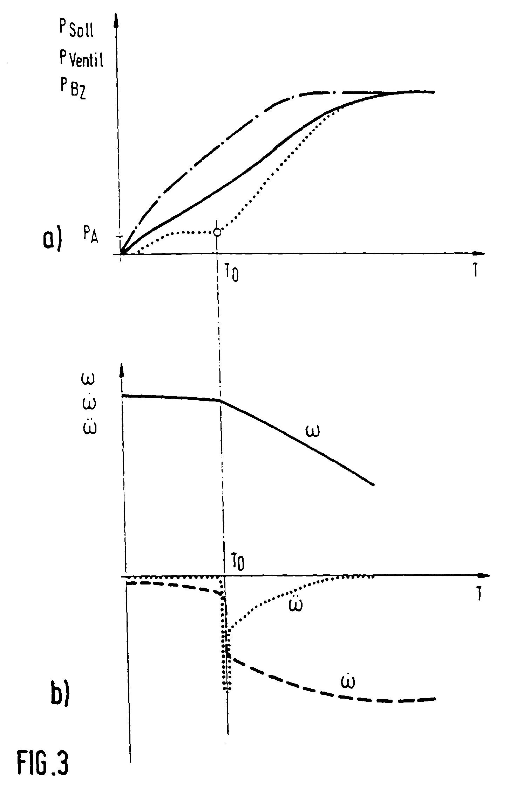

Die erfindungsgemäße Vorgehensweise zur Erfassung des Anlegedrucks läßt sich am besten anhand von charakteristischen Bremsdruckverläufen und zugeordneten Drehzahlverläufen verdeutlichen. In Figur 3a sind daher charakteristische Druckverläufe über der Zeit für den Bremswunsch (P_{Soll}, strichpunktierte Linie), den Druck am Steuer- bzw. Regelventil (P_{Ventil}, durchgezogene Linie) sowie der Druck im Bremszylinder (PBZ, punktierte Linie) aufgezeichnet. Demgegenübergestellt ist in Figur 3b die zeitlichen Verläufe der Radgeschwindigkeit (ω, durchgezogene Linie), der ersten zeitlichen Ableitung der Radgeschwindigkeit (dω/dt, strichlierte Linie) sowie der zweiten zeitlichen Ableitung der Radgeschwindigkeit (d²ω/dt², punktierte Linie) gegenübergestellt. Die erste zeitliche Ableitung der Drehgeschwindigkeit des Rads stellt dabei die Drehbeschleunigung des Rades dar, während die zweite zeitliche Ableitung der Geschwindigkeit den durch das Anlegen der Bremse ausgelösten Ruck repräsentiert. Figur 3 stellt dabei die Situation bei Bremsbetätigung, d.h. beim Druckaufbau dar.

Die Geschwindigkeit des Druckaufbaus ist dabei wesentlich von der Betätigung des Sollwertgebers abhängig (vgl. Bremswunschverlauf). Bei Betätigen des Bremspedals ist anfangs der Bremszylinder drucklos. Es strömt somit aus dem Vorratsbehälter Luft mit hoher Geschwindigkeit zum Bremszylinder infolge des hohen Druckgefälles. Wird der Bremsdruck entfernt vom Bremszylinder, z.B. am Regelventil, erfaßt, ergibt sich ein anderer zeitlicher Verlauf als im Bremszylinder selbst (vgl. durchgezogene und punktierte Linie). Die in den Bremszylinder einströmende Luft wird dabei auf die Druckhöhe verdichtet, die den angreifenden Widerständen am Bremszylinderkolben entspricht. Danach wird der Kolben ausgefahren und über den Bremsbetätigungsmechanismus das Luftspiel der Bremse überwunden. Dieses Ausfahren des Kolbens erfolgt unter weiterer Druckerhöhung. Nach Anlegen der Reibungsbremse strömt immer noch Druckmittel in den Bremszylinder ein. Der Bremsdruck wird weiter gesteigert. Der zugehörige Raddrehzahlverlauf über der Zeit ist in Figur 3b dargestellt. Bei Anlegen der Bremse zum Zeitpunkt t₀ sinkt die Drehgeschwindigkeit des Rades schnell ab. Die erste zeitliche Ableitung der Drehgeschwindigkeit zeigt den strichliert dargestellten charakteristischen, sprungförmigen Verlauf während die zweite zeitliche Ableitung zum Zeitpunkt t₀ ein Maximum aufweist. Die Auswertung des Drehzahlverlaufs, der ersten zeitlichen Ableitung und/oder der zweiten zeitlichen Ableitung erlaubt eine exakte Bestimmung des Zeitpunkts t₀, zu dem die Bremse anliegt. Der zum Zeitpunkt t₀ vorhandene Druck im Bremszylinder wird dann als Anlegedruck PA gespeichert.

Beim Betätigen der Bremse geht für die Bestimmung des Anlegedrucks die Betätigungsgeschwindigkeit stark ein. Es müssen also die Bedingungen für die Betätigungsgeschwindigkeit vorgegeben sein, um nur bei geeigneten Betätigungsgeschwindigkeiten eine Auswertung und Ermittlung des Anlegedrucks durchzuführen.

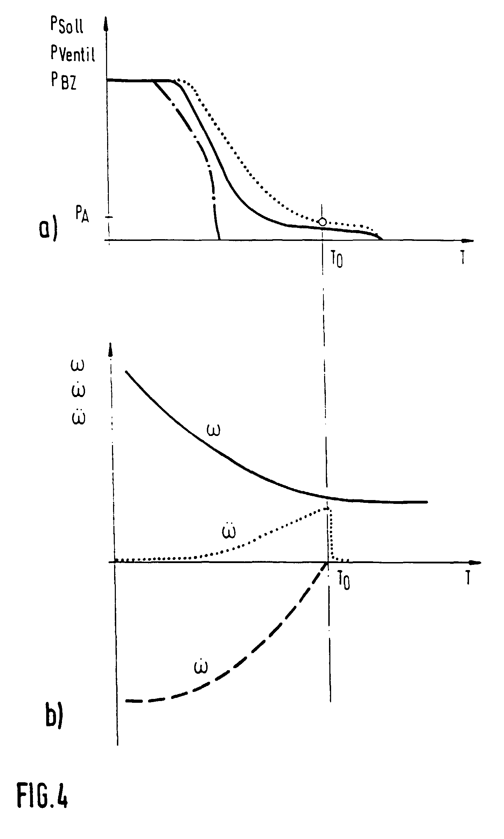

Die Verhältnisse beim Lösen der Bremse sind in Figur 4 dargestellt. Figur 4a zeigt die Verläufe des Bremswunsches (P_{Soll}, strichpunktierte Linie), des Drucks im Regelventil (P_{Ventil}, durchgezogene Linie) sowie des Drucks im Bremszylinder (PBZ, punktierte Linie). Wird der Bremsdruck auf Wunsch des Fahrers gesenkt, strömt Luft aus dem Bremszylinder entsprechend der Vorgabe über das Regelventil ins Freie. Das Druckniveau im Bremszylinder verringert sich. Wird die Bremse schließlich gemäß dem Fahrerwunsch gelöst (Zeitpunkt t₀), dann ist das Druckgefälle zwischen Bremszylinder und Atmosphäre so gering, daß die Ausströmgeschwindigkeit relativ klein wird. Wird schließlich der Anlegedruck unterschritten, dann schieben die Spannkräfte der Bremse (z.B. Zugfeder zwischen den Bremsbacken) und die Rückholfeder im Bremszylinder die Luft aus dem Bremszylinder. In dieser Phase bleibt der Druck durch die Widerstände in den Leitungen und am Regelventil nahezu konstant (Zeitpunkt t₀). Erst wenn der Bremszylinderkolben an der Endlage anschlägt, entspannt sich die restliche Luft aus dem Zylinder und den Leitungen ins Freie. Hier mißt ein weiter vom Bremszylinder entfernter Drucksensor einen geringeren Druck als den im Bremszylinder tatsächlich vorhandenen. Die Differenz zwischen den beiden Druckwerten läßt sich aber durch Vorversuche bestimmen und in der Steuereinheit bei der Speicherung des Anlegedruckwerts berücksichtigen. Im Gegensatz zur Bremsbetätigung zeigt sich beim Entspannen der Luft beim Lösen der Bremse ein ziemlich gleichbleibendes Verhalten für alle Lösegeschwindigkeiten. Es ist also vorteilhaft, den Anlegedruck für die Radbremsen beim Lösen der Bremsen zu ermitteln.

Die Drehzahl des Rades zeigt die in Figur 4b dargestellten charakteristische Drehverläufe. In Figur 4b sind analog zur Figur 3b die Drehgeschwindigkeit (durchgezogene Linie), deren erste zeitliche Ableitung (strichlierte Linie) sowie deren zweite zeitliche Ableitung (punktierte Linie) eingezeichnet. Es zeigt sich, daß bei Lösen der Bremse die Drehgeschwindigkeit des Rades beim Übergang vom verzögerten Zustand in den freirollenden Zustand einen im wesentlichen gleichbleibenden Wert annimmt (Zeitpunkt t₀), die erste zeitliche Ableitung einen in der Nähe des Wertes 0 liegenden Wert nimmt und die zweite zeitliche Ableitung eine sprungförmige Änderung durchläuft. Die Auswertung eines oder einer beliebigen Kombination dieser charakteristischen Verläufe dient zur Erfassung des Anlegezeitpunkts t₀, zu dem der dann vorliegende Druckwert im Bremszylinder bzw. am Regelventil unter Berücksichtigung der Differenz zwischen den beiden Werten als Anlegedruck P_{A} eingespeichert wird.

Es hat sich gezeigt, daß es vorteilhaft ist, das Lösen der Bremse wenigstens zusammen mit dem Betätigen der Bremse auszuwerten.

Da sich der Anlegedruck über längere Zeit nicht stark verändert, sind in der Steuereinheit zulässige Grenzwerte des Anlegedrucks abgespeichert. Diese werden bei Ermittlung des Anlegedrucks überprüft, so daß nur physikalisch plausible Anlegedruckwerte abgespeichert werden können. Ferner muß der Anlegedruck nicht bei jeder Bremsung ausgewertet und korrigiert werden. Eine gelegentliche automatische Korrektur ist ausreichend. Diese Korrektur kann dabei auch im Diagnosebetrieb bei einem Werkstattaufenthalt durchgeführt werden.

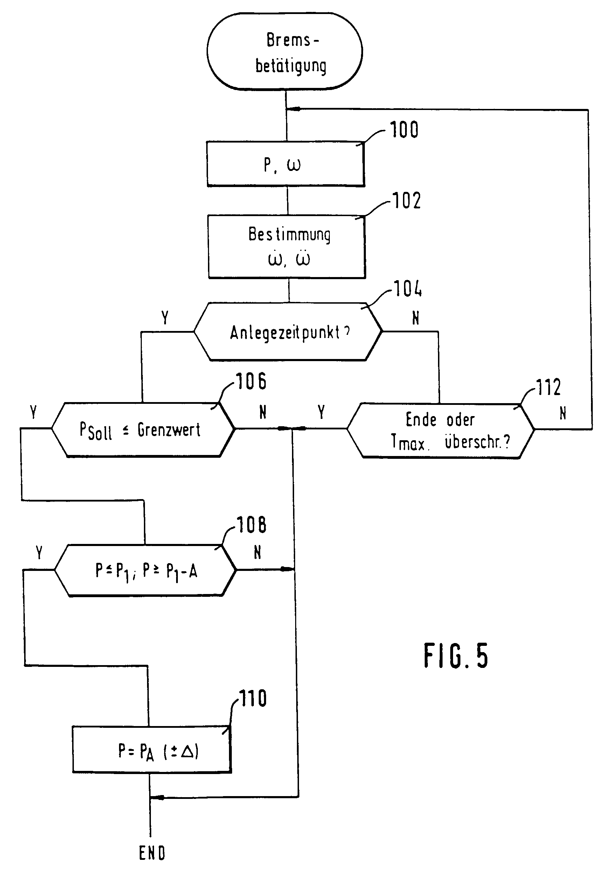

In Figur 5 ist ein Flußdiagramm gezeichnet, welches ein in der Steuereinheit ablaufendes Rechenprogramm zur Ermittlung des Anlegedrucks bei Bremsbetätigung skizziert. Der in Figur 5 dargestellte Programmteil wird durch eine Bremsbetätigung gestartet, wobei ggf. ein Zeitfaktor berücksichtigt wird, so daß der Programmteil nicht bei jeder Bremsbetätigung ausgeführt wird. In einem anderen vorteilhaften Ausführungsbeispiel wird der Programmteil während des Diagnosebetriebs durch externe Schaltsignale gestartet. Eine Bremsbetätigung wird durch einen von Null verschiedenen Bremswunsch erkannt. Der dargestellte Programmteil beschreibt die Vorgehensweise zur Ermittlung des Anlegedrucks an einem Rad. Für die anderen Räder des Kraftfahrzeugs wird der Programmteil entsprechend durchlaufen. Nach Start des Programmteils wird in einem ersten Schritt 100 der gerade vorliegende Druckwert P sowie die Drehgeschwindigkeit ω des Rades eingelesen. Danach wird im Abfrageschritt 102 die erste zeitliche Ableitung der Drehgeschwindigkeit und in einem bevorzugten Ausführungsbeispiel die zweite zeitliche Ableitung der Drehgeschwindigkeit aus dem aktuellen Wert der Drehgeschwindigkeit und einem in einem vorherigen Programmdurchlauf erfaßten Wert ermittelt. Im darauffolgenden Abfrageschritt 104 wird dann aufgrund der bestimmten Werte der Ableitungen oder aus dem zeitlichen Verlauf des Drehgeschwindigkeitssignals selbst (z.B. Differenz zweier aufeinanderfolgender Drehzahlwerte) eine Verzögerung des Rades, ein sprungförmiger Verlauf der ersten Ableitung und/oder ein Maximum der zweiten Ableitung durch bekannte mathematische Methoden und Schwellwertvergleiche ermittelt. Ist eines oder sind alle Kriterien erfüllt, so wird im Abfrageschritt 106 überprüft, ob die Bremsbetätigungsgeschwindigkeit für eine Erfassung des Anlegedrucks in einem geeigneten Wertebereich liegt. Dazu wird die zeitliche Ableitung des Solldrucks (oder der Bremspedalstellung) mit einem vorgegebenen Grenzwert verglichen. Ist sie kleiner als dieser Grenzwert, wird im darauffolgenden Abfrageschritt 108 überprüft, ob der im jetzigen Programdurchlauf erfaßte Druck innerhalb eines vorgegebenen Wertebereichs sich befindet. Ist dies der Fall, wird im Schritt 110 der aktuell vorherrschende Druck als Anlegedruck gespeichert. Letzteres ist für die Erfassung des Drucks im Bremszylinder exakt. Wird der Druck in der Nähe des Regelventils erfaßt, wird der abgespeicherte Druckwert um den vorbestimmten Differenzwert, einen festen Betrag, korrigiert. Bei einem Proportionalventil wird anstelle eines Drucks die Ansteuersignalgröße eingelesen und im Schritt 110 der bei Vorliegen der Bedingungen der Schritte 104 bis 108 vorliegenden Ansteuersignalgröße gespeichert. Nach Schritt 110 wird der Programmteil beendet.

Ist eine der Bedingungen der Abfrageschritte 106 und 108 verletzt, wird der Programmteil beendet. Wird im Abfrageschritt 104 erkannt, daß keines der Kriterien zur Festlegung des Anlegezeitpunkts erfüllt ist, wird im Abfrageschritt 112 überprüft, ob die Bremsbetätigung beendet ist, bzw. ob eine Maximalzeit zur Erfassung des Anlegedrucks abgelaufen ist. Ist dies der Fall, wird der Programmteil beendet, andernfalls wird er mit Schritt 100 wiederholt.

Im bevorzugten Ausführungsbeispiel werden im Abfrageschritt 104 alle Bedingungen bezüglich der Drehgeschwindigkeit, der ersten und zweiten zeitlichen Ableitung gemeinsam überprüft. In anderen vorteilhaften Ausführungsbeispielen können hier zwei oder lediglich eines der Kriterien zur Bestimmung des Anlegezeitpunktes überprüft werden.

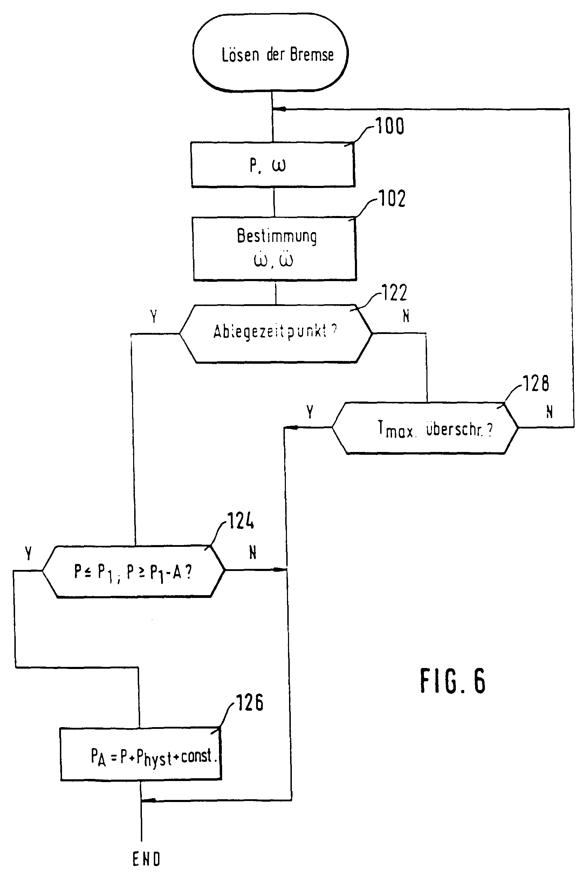

In Figur 6 ist ein Flußdiagramm dargestellt, welches ein Rechenprogramm zur Ermittlung des Anlegedrucks beim Lösen der Bremse skizziert. Hier muß beachtet werden, daß die beim Lösen und beim Anlegen ermittelten Anlegedruckwerte nicht gleich sind, sondern sich um eine Hysteresebreite unterscheiden. Da für die Steuerung der Bremsanlage der Anlegedruck beim Druckaufbau wichtiger ist, wird durch Vorversuche ein experimenteller Wert für diese Hysterese ermittelt und bei der Bestimmung des Anlegedruckwertes beim Lösen der Bremse berücksichtigt. Diese Hysterese kann auch im Rahmen der dargestellten Vorgehensweise ermittelt werden, wenn der Anlegedruck bei Lösen der Bremse und bei Bremsbetätigung erfaßt und die daraus ermittelte Differenz als Hysteresenwert angenommen wird.

Der in Figur 6 dargestellte Programmteil wird bei Lösen der Bremse, d.h. bei Vorliegen eines Nullwertes des Bremswunsches, eingeleitet. Die darauffolgenden Programmschritte 100 und 102 entsprechen dabei der Vorgehensweise nach Figur 5 und werden daher im Rahmen der Figur 6 nicht näher besprochen. Im Schritt 122 wird überprüft, ob der Ablegezeitpunkt erreicht ist. Dies erfolgt beim Lösen der Bremse durch Überprüfung des Verlaufes der Drehgeschwindigkeit des Rades auf den Übergang zwischen Verzögerung und freirollendem Zustand, durch Überprüfung der ersten Ableitung auf einen Wert im Bereich von Null und/oder durch Überprüfung der zweiten Ableitung auf einen sprungförmigen Verlauf. Sind die Bedingungen zur Erkennung des Ablegezeitpunktes erfüllt, so wird gemäß Schritt 124 der dann vorliegende Druckwert auf einen zulässigen Druckwertebereich überprüft. Ist der vorliegende Druckwert innerhalb dieses Bereichs, wird im Schritt 126 der dann vorliegende Wert P als Anlegedruckwert PA gespeichert, wobei vorzeichenrichtig der vorbestimmte Hysteresenwert Physt sowie gegebenenfalls der Korrekturwert bei Druckerfassung im Ventil berücksichtigt wird. Auch hier kann anstelle des Drucksignals das Ansteuersignal eines Proportionalventils eingesetzt werden. Befindet sich der Druckwert im Schritt 124 nicht im vorgegebenen Bereich oder ist die maximale Zeit ohne Ermittlung des Anlegezeitpunkts abgelaufen (Schritt 128), wird der Programmteil beendet.

## Patentansprüche

1. Verfahren zur Ermittlung des Anlegedrucks einer Radbremse für ein Fahrzeug, wobei ein Maß (30) für einen in der Radbremse herrschenden Druck erfaßt wird, ein Maß für die Drehgeschwindigkeit wenigstens eines zu bremsenden Rades erfaßt wird, dadurch gekennzeichnet, daß aus dem zeitlichen Verlauf des Drehgeschwindigkeitssignals der Anlegezeitpunkt (T₀) und damit der Anlegedruck (P_{A}) der Radbremse abgeleitet wird.

2. Verfahren nach Anspruch 1, dadurch gekennzeichnet, daß aus dem Drehgeschwindigkeitssignal die erste und/oder zweite zeitliche Ableitung gebildet wird.

3. Verfahren nach Anspruch 2, dadurch gekennzeichnet, daß beim Druckaufbau bei Bremsbetätigung der Anlegezeitpunkt dann erkannt wird, wenn der Verlauf des Drehzahlsignals einen Knickpunkt aufweist und/oder die erste zeitliche Ableitung des Drehzahlsignals einen sprungförmigen Verlauf aufweist und/oder die zweite zeitliche Ableitung des Drehgeschwindigkeitssignals einen Maximalwert aufweist.

4. Verfahren nach Anspruch 2, dadurch gekennzeichnet, daß bei Lösen der Bremse der Anlegezeitpunkt dann erkannt wird, wenn der Verlauf des Drehzahlsignals einen Knickpunkt aufweist und/oder die erste zeitliche Ableitung des Drehgeschwindigkeitssignals einen Wert im Bereich 0 aufweist, die zweite zeitliche Ableitung einen sprungförmigen Verlauf zeigt.

5. Verfahren nach einem der vorhergehenden Ansprüche, dadurch gekennzeichnet, daß der zum Anlegezeitpunkt vorliegende Druck oder das zum Anlegezeitpunkt vorliegende Ansteuersignal eines Proportionalventils als ein Maß für den Anlegedruck gespeichert wird.

6. Verfahren nach einem der vorhergehenden Ansprüche, dadurch gekennzeichnet, daß der ermittelte Druckwert bei Lösen der Bremse durch einen Hysteresewert auf den Druckwert korrigiert wird, der bei Bremsbetätigung als Anlegedruck vorliegen würde.

7. Verfahren nach einem der vorhergehenden Ansprüche, dadurch gekennzeichnet, daß als Druckwert der Druck im Bremszylinder oder ein Druck im Bereich des Steuer- oder Regelventils für den Bremszylinder erfaßt wird, wobei bei letzterem zur Bestimmung des Anlegedrucks ein Korrekturwert berücksichtigt wird.

8. Verfahren nach einem der vorhergehenden Ansprüche, dadurch gekennzeichnet, daß beim Druckaufbau eine Ermittlung des Anlegedrucks nur dann erfolgt, wenn die Bremsbetätigungsgeschwindigkeit in einem vorbestimmten Wertebereich liegt und wenn der als Anlegedruckwert zu erfassende Druck innerhalb vorgegebener Grenzwerte liegt, bei Lösen der Bremse eine Ermittlung des Anlegedrucks nur dann erfolgt, wenn der Druckwert innerhalb vorbestimmter Grenzwerte liegt.

9. Verfahren nach einem der vorhergehenden Ansprüche, dadurch gekennzeichnet, daß der Anlegedruckwert bei Bremsbetätigung und/oder beim Lösen der Bremse ermittelt wird.

10. Vorrichtung zur Ermittlung des Anlegedrucks einer Radbremse für ein Fahrzeug, mit Mittel (30) zur Erfassung eines Maßes für einen Druck im Bereich der Radbremse (22, 26), mit einem Mittel (36) zur Erfassung der Drehgeschwindigkeit wenigstens eines zu bremsenden Rades, mit einer Steuereinheit (18), welche das Maß für den Druck sowie die Drehgeschwindigkeit empfängt, dadurch gekennzeichnet, daß die Steuereinheit aus dem zeitlichen Verlauf der Drehgeschwindigkeit den Anlegezeitpunkt (T₀) und damit den Anlegedruck (P_{A}) der Radbremse ableitet.

## Claims

1. Method for determining the application pressure of a wheel brake for a vehicle, a measure (30) of a pressure which prevails in the wheel brake being recorded, and a measure of the rotational speed of at least one wheel to be braked being recorded, characterized in that the application time (T₀) and, consequently, the application pressure (P_{A}) of the wheel brake are derived from the time profile of the rotational speed signal.

2. Method according to Claim 1, characterized in that the first and/or second timed alleviation is formed from the rotational speed signal.

3. Method according to Claim 2, characterized in that, when pressure builds up during brake activation, the application time is recorded when the profile of the rotational speed signal has a break point and/or the first time derivation of the rotational speed signal has an irregular profile and/or the second time derivation of the rotational speed signal has a maximum value.

4. Method according to Claim 2, characterized in that, when the brake is released, the application time is recorded when the profile of the rotational speed signal has a break point and/or the first time derivation of the rotational speed signal has a value in the region of 0, and the second time derivation shows an irregular profile.

5. Method according to one of the preceding claims, characterized in that the pressure prevailing at the application time or the activation signal from a proportional valve, prevailing at the application time, is stored as a measure of the application pressure.

6. Method according to one of the preceding claims, characterized in that, when the brake is released, the pressure value determined is corrected by means of a hysteresis value to the pressure value which would prevail as the application pressure when the brake is actuated.

7. Method according to one of the preceding claims, characterized in that the pressure in the brake cylinder or a pressure in the region of the control or regulator valve for the brake cylinder is recorded as the pressure value, in the latter case a correcting value being taken into account in order to determine the application pressure.

8. Method according to one of the preceding claims, characterized in that, when pressure builds up, the application pressure is determined only when the brake activation speed is within a predetermined value range and when the pressure to be recorded as the application pressure value is within predetermined limit values, and, when the brake is released, the application pressure is determined only when the pressure value is within predetermined limit values.

9. Method according to one of the preceding claims, characterized in that the application pressure value is determined when the brake is actuated and/or when the brake is released.

10. Device for determining the application pressure of a wheel brake for a vehicle, with means (30) for recording a measure of a pressure in the region of the wheel brake (22, 26), with a means (36) for recording the rotational speed of at least one wheel to be braked, and with a control unit (18) which receives the measure of the pressure and the rotational speed, characterized in that the control unit derives the application time (T₀) and, consequently, the application pressure (P_{A}) of the wheel brake from the time profile of the rotational speed.

## Revendications

1. Procédé servant à déterminer la pression appliquée par un frein de roue dans un véhicule, une mesure (30) étant détectée pour une pression régnant dans le frein de roue, et une mesure étant détectée pour la vitesse de rotation d'au moins une roue à freiner,
caractérisé en ce qu'
on prend la dérivée de l'instant d'application (Tₒ) et de cette façon de la pression d'application (P_{A}) du frein de roue à partir du déroulement dans le temps du signal de la vitesse de rotation.

2. Procédé selon la revendication 1,
caractérisé en ce que
la première et/ou la deuxième dérivée dans le temps sont formées à partir du signal de la vitesse de rotation.

3. Procédé selon la revendication 2,
caractérisé en ce que
pendant la montée en pression lors de l'actionnement du frein, on détecte alors l'instant de l'application quand le déroulement du signal de la vitesse de rotation présente un point d'inflexion et/ou quand la première dérivée du signal de la vitesse de rotation présente un parcours qui fait un saut et/ou quand la deuxième dérivée du signal de la Vitesse de rotation présente une valeur maximale.

4. Procédé selon la revendication 2,
caractérisé en ce que
lors du relâchement du frein on détecte alors l'instant de l'application, quand le déroulement du signal de la vitesse de rotation présente un point d'inflexion, et/ou quand la première dérivée dans le temps du signal de la vitesse de rotation présente une valeur se situant dans la zone 0 et la seconde dérivée dans le temps présente un parcours qui fait un saut.

5. Procédé selon l'une des revendications précédents,
caractérisé en ce qu'
on met en mémoire la pression qui règne à l'instant de l'application ou le signal de commande, qui se présente à l'instant de l'application, d'une vanne proportionnelle, en tant que mesure de la pression d'application.

6. Procédé selon l'une des revendications précédentes,
caractérisé en ce que
la valeur de la pression qui a été déterminée lors du relâchement du frein est corrigée par une valeur d'hystérésis appliquée à la valeur de la pression, qui devrait régner lors de l'actionnement du frein comme pression d'application.

7. Procédé selon l'une des revendications précédentes,
caractérisé en ce qu'
on détecte, comme valeur de la pression, la pression dans le cylindre de frein ou une pression dans la zone de la vanne de commande ou de la vanne de réglage pour le cylindre de frein, en prenant en considération une valeur de correction dans le cas de ce dernier pour déterminer la pression d'application.

8. Procédé selon l'une des revendications précédents,
caractérisé en ce que
lors de la mise en pression une détermination de la pression d'application n'a lieu que quand la vitesse d'actionnement du frein se trouve dans une zone de valeurs prédéterminées et quand la pression à détecter en tant que valeur de la pression d'application se trouve à l'intérieur de valeurs limites prédéfinies, et en ce que lors du relâchement du frein une détection de la pression d'application n'a lieu que quand la valeur de la pression se trouve à l'intérieur de valeurs limites prédéterminées.

9. Procédé selon l'une des revendications précédentes,
caractérisé en ce que
la valeur de la pression d'application est déterminée lors de l'actionnement du frein et/ou lors du relâchement du frein.

10. Dispositif servant à déterminer la pression d'application d'un frein de roue pour un véhicule, comprenant des moyens (30) pour déterminer une mesure pour une pression dans la zone des freins de roue (22, 26), un moyen (36) pour déterminer la vitesse de la rotation d'au moins une roue à freiner, avec une unité de commande (18), qui reçoit la mesure de la pression ainsi que la vitesse de la rotation,
caractérisé en ce que
l'unité de commande prend la dérivée, à partir du déroulement dans le temps de la vitesse de rotation, de l'instant de l'application (Tₒ) et de cette façon de la pression d'application (P_{A}).
